# EUROPÄISCHE PATENTSCHRIFT

(11) **EP 2 211 222 B1**
(45) Veröffentlichungstag und Bekanntmachung des Hinweises auf die Patenterteilung: **18.10.2023**
(21) Anmeldenummer: 10001987.6
(22) Anmeldetag: 08.04.2006
(51) Int. Cl.: G02B 23/00

(54) **Fernoptische Einrichtung mit grossem Sehfeld und hoher Vergrösserung**
Telescope with wide field of view and large magnification
Lunette de visée à grand champ et grossissement élevé

(30) Priorität: 20.07.2005 AT 12202005
(43) Veröffentlichungstag der Anmeldung: 28.07.2010
(62) Teilanmeldung aus: 06007466.3
(73) Patentinhaber: Swarovski-Optik AG & Co KG., 6067 Absam (AT)
(72) Erfinder: Fiedler, Albert, 6067 Absam (AT)
(74) Vertreter: Ofner, Clemens

(56) Entgegenhaltungen:
- WO-A2-2006/081411
- GB-A- 191 321 621
- US-A- 3 045 545
- US-A- 4 172 634
- Absatz: 3,4,18,19,23: In: Albert König, Horst Köhler: "Die Fernrohre und Entfernungsmesser" 1. Januar 1959 (1959-01-01), Springer Verlag , Berlin , XP002582811 * Seite 173 - Seite 179 * * Seite 217 - Seite 221 * * Abbildungen 131,187,191 * * Seite V - Seite VIII * * Seite 26 - Seite 39 *

## Beschreibung

Die vorliegende Erfindung betrifft eine fernoptische Einrichtung, insbesondere ein Fernrohr oder Zielfernrohr, mit einem Umkehrsystem und einer verstellbaren Vergrößerungsoptik mit einer mehr als vierfachen Vergrößerung.

Wenn ein Gegenstand in großer Entfernung mit bloßem Auge betrachtet wird, so erscheint dieser unter einem kleinen Winkel. Sinn einer jeden femoptischen Einrichtung ist es, diesen kleinen Winkel zu vergrößern. Die fernoptische Einrichtung sorgt also dafür, dass ein möglichst großer Erscheinungswinkel in das Auge des Betrachters gelangen kann. Zugleich sollte ein möglichst großer Geländeausschnitt überblickt werden können.

Bei gattungsgemäßen zoombaren femoptischen Einrichtungen mit verstellbarer Vergrößerung ist es besonders kritisch, über den gesamten Vergrößerungsbereich einen möglichst großen Geländeausschnitt überblicken zu können.

Aufgabe der Erfindung ist es, gattungsgemäße fernoptische Einrichtungen diesbezüglich zu verbessern.

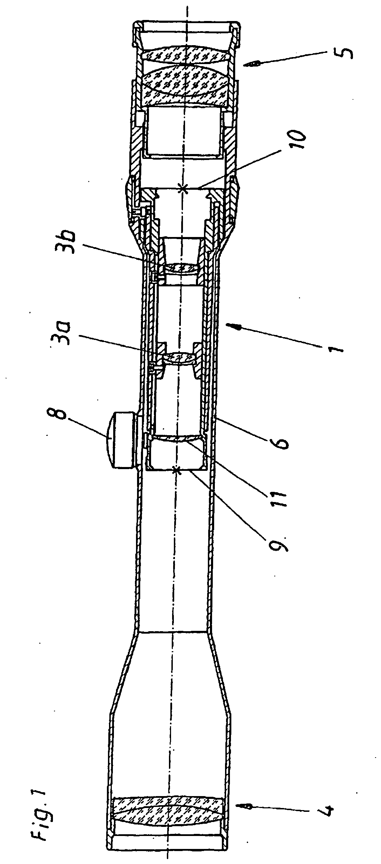

Das Dokument US 4,172,634 beschreibt einen Mechanismus zur Verstellung der Vergrößerung bei einem Zielfernrohr. Dieses weist ein Mittelrohr und ein Umkehrsystem mit einer verstellbaren Vergrößerungsoptik mit zwei relativ zueinander verschiebbaren optischen Elementen ("erector lens 24") auf. Weiters ist auf der dem Okular ("ocular lens housing 6" in Fig. 1) zugewandten Seite des Umkehrsystems eine zusätzliche Linse vorgesehen. Diese zusätzliche Linse ist in dem Gehäuse des Umkehrsystems ("erector tube 16") feststehend angeordnet.

Das in dem Dokument US 3,045,545 beschriebene optische System für ein Beobachtungsgerät umfasst neben dem Objektiv und dem Okular eine Zoomoptik zur kontinuierlichen Veränderung der Vergrößerung. Die Zoomoptik bildet dabei das in einer objektivseitigen Bildebene entworfene Zwischenbild mit einem veränderbaren Abbildungsmaßstab in die okularseitige Bildebene ab, wobei das Bild auch aufgerichtet bzw. umgekehrt wird. Die Zoomoptik besteht dabei aus zwei gegeneinander verschiebbaren Linsensystemen. Das beschriebene Beobach tungsgerät umfasst weiters zwischen dem Objektiv und der Zoomoptik bzw. dem Umkehrsystem ein als Fokussierer bezeichnetes Linsensystem und ein Feldlinse. Die Vergrößerung des Beobachtungsgerätes kann über einen Bereich (Zoom) von 4:1 variiert werden.

Dies wird erfindungsgemäß durch ein Fernrohr oder Zielfernrohr gemäß Anspruch 1 erreicht, das ein Umkehrsystem enthält, in das eine verstellbare Vergrößerungsoptik integriert ist, wobei eine optische Strahlumlenkeinrichtung in das Umkehrsystems integriert ist, die durch eine zusätzliche Linsenanordnung gebildet ist, und wobei das Umkehrsystem in der maximalen Vergrößerung eine Gesamtbrennweite von höchstens 11 mm, zumindest für Licht mit einer Wellenlänge von etwa 550 nm, aufweist.

Damit wird auch erreicht, dass bei allen Vergrößerungen ein subjektives Sehfeld der femoptischen Einrichtung von mindestens 22°, vorzugsweise zwischen 22° und 24°, zumindest für Licht mit einer Wellenlänge von etwa 550 nm, gewährleistet ist.

Mittels der optischen Strahlumlenkeinrichtung ist es nun auch bei niedrigen Vergrößerungen, insbesondere bei der niedrigsten Vergrößerung, der femoptischen Einrichtung möglich, ein

### Weiter auf Seite 2 der Veröffentlichung!

subjektives Sehfeld von mindestens 22° bereitzustellen. Dies war bisher nur bei größeren Vergrößerungen gattungsgemäßer femoptischer Einrichtungen möglich. Der Betrachter sieht mit Hilfe der erfindungsgemäßen femoptischen Einrichtung somit auch bei niedrigen Vergrö-βerungen einen größeren Geländeausschnitt, als dies der Stand der Technik bisher zuließ.

Gemäß eines weiteren Aspektes der Erfindung ist vorgesehen, dass die Strahlumlenkeinrichtung in der maximalen Vergrößerung eine Gesamtbrennweite des Umkehrsystems zwischen 11 mm und 7 mm, vorzugsweise zwischen 10 mm und 8 mm, gewährleistet.

Weitere Einzelheiten und Merkmale der Erfindung werden anhand der nachfolgend beschriebenen Figuren erläutert. Dabei zeigt:
- Fig. 1: einen Längsschnitt durch ein Zielfernrohr gemäß des Standes der Technik;
- Fig. 2a bis 2c: jeweils einen Schnitt durch ein Umkehrsystem gemäß des Standes der Technik;
- Fig. 3a bis 3c: jeweils einen Schnitt durch ein Umkehrsystem für ein erfindungsgemäßes Ausführungsbeispiel eines Zielfernrohrs und
- Fig. 4: einen schematisierten Messaufbau zur Bestimmung des subjektiven Sehfeldes.

Fig. 1 zeigt schematisch einen Schnitt durch ein Zielfernrohr gemäß des Standes der Technik. Dieses weist auf der beim Beobachten dem Objekt zugewandten Seite eine im Folgenden als Objektiv 4 bezeichnete Linsenanordnung und auf der dem Auge des Betrachters zugewandten Seite ein als Okular 5 bezeichnetes Linsensystem auf. Zwischen Objektiv 4 und Okular 5 befindet sich das Mittelrohr 6. Dieses trägt häufig einen oder mehrere Verstelltürme 8, mit denen verschiedene beim Stand der Technik bekannte Justierfunktionen durchgeführt werden können. Innerhalb des Mittelrohres befindet sich zwischen Objektiv 4 und Okular 5 das Umkehrsystem 1. Dies ist ein beim Stand der Technik bekanntes optisches System, das zur Aufrichtung des vom Objektiv 4 erzeugten Bildes dient. Das Umkehrsystem 1 ist in der Regel zwischen der objektivseitigen Bildebene 9 und der okularseitigen Bildebene 10 angeordnet.

Darüber hinaus dient das Umkehrsystem 1 häufig nicht nur dem Aufrichten sondern auch dem Vergrößern des in der objektivseitigen Bildebene 9 erzeugten Zwischenbildes. In dem Zielfernrohr gemäß Fig. 1 ist die Vergrößerungsoptik in das Umkehrsystem 1 integriert. Vergrö-βerungsoptik und Umkehrsystem sind somit in einem Bauteil ausgeführt.

Zum Vergrößern und Aufrichten des Bildes sind zwei optische Elemente 3a und 3b vorgesehen. In der Regel handelt es sich hierbei um Achromaten, die in günstiger Weise zur Kontrolle der chromatischen Aberration als sogenannte Kittlinsen, also als zusammengeklebte Linsenanordnungen ausgeführt sind. Sie weisen beim Stand der Technik wie auch bei Umkehrsystemen bzw. femoptischen Einrichtungen gemäß der Erfindung günstigerweise Brechkräfte von + 20 dpt (Dioptrien) bis + 53 dpt, vorzugsweise von + 21 dpt bis + 35 dpt, besonders bevorzugt im Bereich zwischen + 23 dpt und + 26 dpt, auf. Um die Vergrößerung des gezeigten Zielfernrohres verstellbar zu gestalten, sind die optischen Elemente 3a und 3b entlang von Steuernuten bewegbar. Durch Verschieben der optischen Elemente 3a und 3b wird das vom Objektiv 4 in der objektivseitigen Bildebene 9 entworfene Zwischenbild mit sich veränderndem Abbildungsmaßstab und aufgerichtet in der okularseitigen Bildebene 10 abgebildet. Der Abstand der beiden Bildebenen 9 und 10 ändert sich im gezeigten Ausführungsbeispiel durch das Verschieben der optischen Elemente 3a und 3b nicht. Beim Stand der Technik ist es darüber hinaus auch bekannt, zusätzlich noch eine Feldlinse 11 vorzusehen. Diese hilft, das vom Objektiv 4 kommende Strahlenbündel eines am Sehfeldrand liegenden Objektpunktes durch den engen Kanal des Mittelrohres 6 bzw. Umkehrsystems 1 hindurchzuleiten.

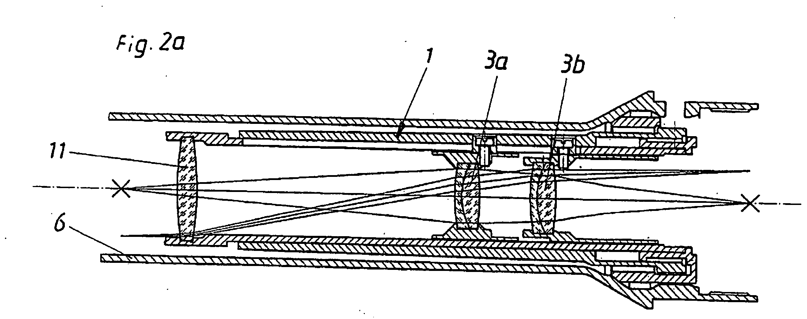

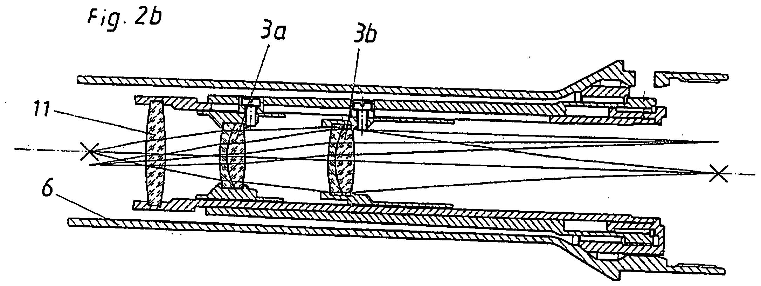

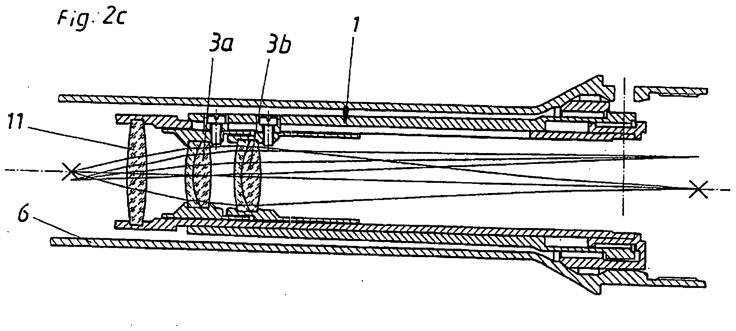

Die Veränderung des Abbildungsmaßstabes durch Bewegung der optischen Elemente 3a und 3b entlang von hier nicht weiter im Detail dargestellten Steuernuten ist beim Stand der Technik bekannt. Die Fig. 2a bis 2c zeigen die Stellungen der optischen Elemente 3a und 3b bei verschiedenen Vergrößerungen. In der in Fig. 2a gezeigten Stellung wird zum Beispiel eine einfache Vergrößerung erreicht. In der Stellung gemäß Fig. 2b erzielt das Umkehrsystem 1 eine Vergrößerung um das 2,5-fache und in der in Fig. 2c gezeigten Stellung um das 4-fache.

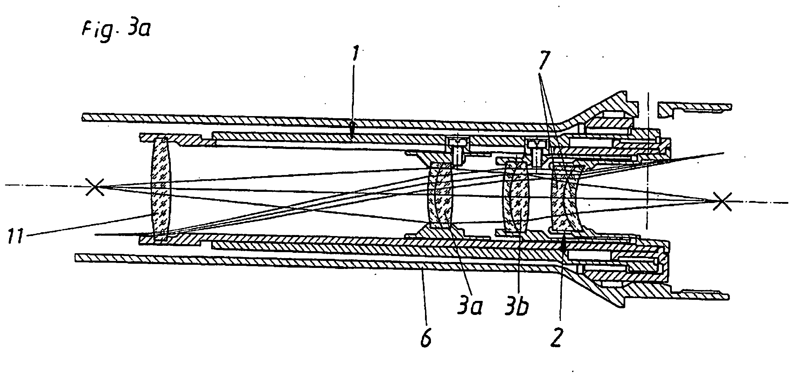

Um nun ein subjektives Sehfeld von mindestens 22° b ei einer femoptischen Einrichtung mit einer maximalen Vergrößerung bzw. einem maximalen Zoom größer vierfach auch bei niedrigen Vergrößerungen gewährleisten zu können, sieht die Erfindung eine optische Strahlumlenkeinrichtung 2 vor. Diese ist in einem Ausführungsbeispiel in den Fig. 3a bis 3c gezeigt und hier als zusätzliche Linsenanordnung in das Umkehrsystem 1 integriert. Das in den Fig. 3a bis 3c gezeigte erfindungsgemäße Umkehrsystem 1 kann zum Beispiel an Stelle des dort gezeigten Umkehrsystems 1 in ein Zielfernrohr gemäß Fig. 1 integriert werden. Günstigerweise ist vorgesehen, dass die optische Strahlumlenkeinrichtung das subjektive Sehfeld von mindestens 22°, vorzugsweise zwischen 22° und 24°, bei einer Vergrößerungsoptik, vorzugsweise des Umkehrsystems, mit einer mindestens fünffachen, vorzugsweise bei einer mindestens sechsfachen, maximalen Vergrößerung bei allen Vergrößerungsstufen gewährleistet. Zur besseren Kontrolle der chromatischen Aberration erweist es sich als sinnvoll, dass die optische Strahlumlenkeinrichtung 2, vorzugsweise zwei, miteinander verklebte Linsen 7, also Kittlinsen, aufweist. Es wäre aber auch denkbar, die optische Strahlumlenkeinrichtung 2 als Einzellinse auszubilden.

Die optische Strahlumlenkeinrichtung 2 ist auf der zum Okular 5 weisenden Seite des Umkehrsystems angeordnet, mit einer Positionierung auf der vom Okular 5 wegweisenden Seite der okularseitigen Bildebene 10.

Eine konstruktiv besonders einfache Lösung sieht vor, dass die optische Strahlumlenkeinrichtung 2 fix, also nicht bewegbar bezüglich des Mittelrohres 6, angeordnet ist. Es kann sich in gewissen Ausführungsformen aber auch als notwendig erweisen, die optische Strahlumlenkeinrichtung 2 bewegbar, also in der Regel entlang der optischen Achse verschiebbar, auszugestalten.

Das Mittelrohr 6 weist bisher bei gängigen Zielfernrohren einen Außendurchmesser zwischen 30 mm und 35 mm auf. Dies natürlich gerechnet ohne etwaig vorhandene Verstelltürme 8 oder dergleichen. Diese Abmessung des Mittelrohres 6 wird günstigerweise auch bei erfindungsgemäßen Zielfernrohren beibehalten.

Die optische Strahlumlenkeinrichtung 2 hat eine Brechkraft zwischen -20 dpt (Dioptrien) und -40 dpt, vorzugsweise zwischen -27 dpt und -37 dpt, aufweist. In einem konkreten Beispiel ist eine Brechkraft von -27,03 dpt vorgesehen, wobei bei allen Vergrößerungen ein subjektives Sehfeld von 23,5° erreicht wird.

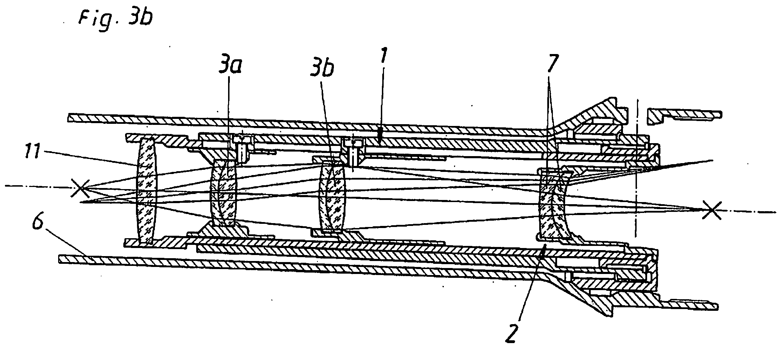

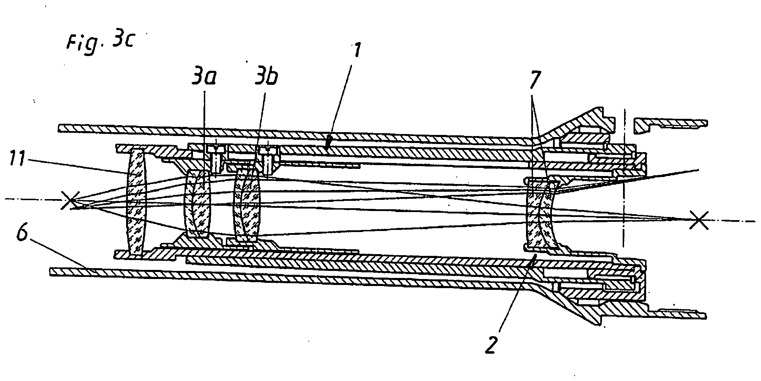

Die Fig. 3a bis 3c zeigen das erfindungsgemäße Umkehrsystem 1 wiederum in drei verschiedenen Positionen der für die Vergrößerung und Umkehrung des Bildes vorgesehenen optischen Elemente 3a und 3b. In der Stellung in Fig. 3a handelt es sich zum Beispiel um eine einfache Vergrößerung. Fig. 3b zeigt die Positionierung bei einer 3,5-fachen Vergrößerung und Fig. 3c bei einer sechsfachen Vergrößerung. Die optische Strahlumlenkeinrichtung 2 sorgt durch Strahlumlenkung für eine Vergrößerung des subjektiven Sehfeldes. Es kann hierdurch erfindungsgemäß bei allen Vergrößerungen ein subjektives Sehfeld von mindestens 22° bzw. bei der maximalen Vergrößerung eine Gesamtbrennweite kleiner gleich 11 mm erreicht werden. Die Gesamtbrennweite des erfindungsgemäßen Umkehrsystems 1 liegt auf Grund der Strahlumlenkeinrichtung 2 bei der maximalen Vergrößerung günstigerweise zwischen 11 mm und 7 mm, vorzugsweise zwischen 10 mm und 8 mm. Im erwähnten konkreten Ausführungsbeispiel wurde eine Gesamtbrennweite von 8,264 mm in der maximalen Vergrößerung erreicht.

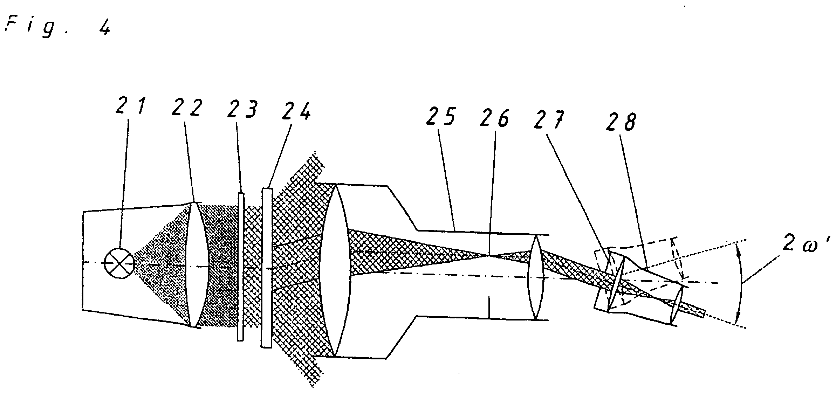

Die Größe des subjektiven Sehfeldes 2 ω' wird mittels einer Winkelmessung bestimmt. Der entsprechende Messaufbau für Prüflinge mit einer reellen Austrittspupille ist in Fig. 4 gezeigt. Auf der Okularseite des Prüflings 25 wird ein Hilfsfernrohr 28 auf einem Drehtisch mit einer Winkelmesseinrichtung montiert. Es sollte dabei ein Hilfsfernrohr 28 mit etwa dreifacher Vergrößerung, einem Durchmesser der Eintrittspupille von etwa 3 mm und einer Peilmarke, wie zum Beispiel einem Fadenkreuz, verwendet werden. Zur Vermeidung von Farbsäumen im Bild wird zur Messung grünes Licht mit einer Wellenlänge von etwa 550 nm verwendet. Der Messaufbau sieht eine Abfolge mit einer Lichtquelle 21, einem Kondensor 22, einem Filter 23, einer Streuscheibe 24, einer zu prüfenden femoptischen Einrichtung (Prüfling) 25, einer Sehfeldblende 26 und einem Hilfsfernrohr 28 auf der Position 27 der Austrittspupille vor. Zur Durchführung der Messung liegt die Schwenkachse des Hilfsfernrohres 28 am Ort der Austrittspupille 27 und in der Ebene der Eintrittspupille des Hilfsfernrohrs. Die Schwenkachse schneidet die optische Achse des Prüflings 25 und die des Hilfsfernrohres 28 rechtwinklig. Das auf die Sehfeldblende 26 des Prüflings 25 scharf gestellte Hilfsfernrohr 28 ist zu schwenken, um dessen Peilmarke nacheinander auf einander gegenüberliegende Ränder des Sehfeldes zu bringen. Die Winkeldifferenz ist an der Skala der Winkelmesseinrichtung des Schwenktisches (in Grad) abzulesen.

Die Messung der Gesamtbrennweite eines Umkehrsystems erfolgt gemäß DIN 58189 (herausgegeben im Mai 1996) und kann mit handelsüblichen Prüfgeräten durchgeführt werden.

## Patentansprüche

1. Fernrohr oder Zielfernrohr mit einem Mittelrohr (6), das zwischen einem Objektiv (4) und einem Okular (5) angeordnet ist, wobei das Mittelrohr (6) einen maximalen Außendurchmesser von 35 mm aufweist,
- und wobei das Mittelrohr (6) ein Umkehrsystem (1) mit einer integrierten verstellbaren Vergrößerungsoptik enthält, wobei das Umkehrsystem (1) und die Vergrößerungsoptik in einem Bauteil ausgeführt sind und das Umkehrsystem (1) ein erstes optisches Element (3a) und ein zweites optisches Element (3b) umfasst, wobei die beiden optischen Elemente (3a, 3b) durch Linsen gebildet und relativ zueinander verschiebbar sind,
- wobei durch das Verschieben der beiden optischen Elemente (3a, 3b) des Umkehrsystems (1) ein von dem Objektiv (4) in einer objektivseitigen Bildebene (9) entworfenes Zwischenbild mit einem veränderbaren Abbildungsmaßstab und aufgerichtet mit mit einer mehr als vierfachen Vergrößerung , in einer okularseitigen Bildebene (10) abgebildet ist,
- **dadurch gekennzeichnet, dass** eine durch eine zusätzliche Linsenanordnung gebildete optische Strahlumlenkeinrichtung (2) als ein drittes optisches Element in das Umkehrsystem (1) integriert ist,
- wobei die Strahlumlenkrichtung (2) auf der dem Okular (5) zugewandten Seite des Umkehrsystems (1) angeordnet ist,
- und wobei das Umkehrsystem (1) zwischen der objektivseitigen Bildebene (9) und der okularseitigen Bildebene (10) angeordnet ist, wobei die objektivseitige Bildebene (9) zwischen dem Objektiv (4) und der dem Objektiv (4) zugewandten Seite des Umkehrsystems (1) liegt, und die okularseitige Bildebene (10) zwischen dem Okular (5) und der dem Okular (5) zugewandten Seite des Umkehrsystems (1) liegt,
- und die Strahlumlenkeinrichtung (2) mit einer Brechkraft zwischen -20 dpt (Dioptrien) und - 40 dpt ausgebildet ist,
- und dass das Umkehrsystem (1) in der maximalen Vergrößerung eine Gesamtbrennweite von höchstens 11 mm, zumindest für Licht mit einer Wellenlänge von etwa 550 nm, aufweist.

2. Fernrohr oder Zielfernrohr nach Anspruch 1, **dadurch gekennzeichnet, dass** das Umkehrsystem (1) in der maximalen Vergrößerung eine Gesamtbrennweite zwischen 11 mm und 7 mm aufweist.

3. Fernrohr oder Zielfernrohr nach Anspruch 2, **dadurch gekennzeichnet, dass** das Umkehrsystem (1) in der maximalen Vergrößerung eine Gesamtbrennweite zwischen 10 mm und 8 mm aufweist.

4. Fernrohr oder Zielfernrohr nach einem der vorhergehenden Ansprüche, **dadurch gekennzeichnet, dass** die Vergrößerungsoptik des Umkehrsystems (1) eine mindestens fünffache maximale Vergrößerung , bevorzugt eine mindestens sechsfache maximale Vergrößerung , aufweist.

5. Fernrohr oder Zielfernrohr nach einem der vorhergehenden Ansprüche, **dadurch gekennzeichnet, dass** die optische Strahlumlenkeinrichtung (2), vorzugsweise zwei, miteinander verklebte Linsen (7) aufweist.

6. Fernrohr oder Zielfernrohr nach einem der vorhergehenden Ansprüche, **dadurch gekennzeichnet, dass** die optische Strahlumlenkeinrichtung (2) eine Brechkraft zwischen -27 dpt und -37 dpt aufweist.

7. Fernrohr oder Zielfernrohr nach einem der vorhergehenden Ansprüche, **dadurch gekennzeichnet, dass** die optische Strahlumlenkeinrichtung (2) auf der zum Okular (5) weisenden Seite des Umkehrsystems (1) fix angeordnet ist.

## Claims

1. A telescope or riflescope with a central tube (6) disposed between an objective lens (4) and an eyepiece (5), wherein the central tube (6) has a maximum outer diameter of 35 mm,
- and wherein the central tube (6) contains an erecting system (1) with an integrated adjustable optical magnification means, wherein the erecting system (1) and the optical magnification means are accommodated in one component and the erecting system (1) comprises a first optical element (3a) and a second optical element (3b), wherein the two optical elements (3a, 3b) are formed by lenses and are displaceable relative to one another,
- wherein, by displacing the two optical elements (3a, 3b) of the erecting system (1), an intermediate image projected by the objective lens (4) in an objective lens-end image plane (9) with a variable reproduction scale and oriented upright with a more than fourfold magnification is projected in an eyepiece-end image plane (10),
- **characterized in that** an optical beam deflector device (2) formed by an additional lens arrangement is integrated as a third optical element in the erecting system (1),
- wherein the beam deflector device (2) is disposed at the end of the erecting system (1) facing the eyepiece (5),
- and wherein the erecting system (1) is disposed between the objective lens-end image plane (9) and the eyepiece-end image plane (10), wherein the objective lens-end image plane (9) lies between the objective lens (4) and the end of the erecting system (1) facing the objective lens (4), and the eyepiece-end image plane (10) lies between the eyepiece (5) and the end of the erecting system (1) facing the eyepiece (5),
- and the beam deflector device (2) is formed with a refractive power between -20 dpt (diopters) and -40 dpt,
- and that the erecting system (1) has a total focal length of at most 11 mm in the maximum magnification, at least for light with a wavelength of about 550 nm.

2. The telescope or riflescope according to claim 1, **characterized in that** the erecting system (1) has a total focal length of between 11 mm and 7 mm in the maximum magnification.

3. The telescope or riflescope according to claim 2, **characterized in that** the erecting system (1) has a total focal length of between 10 mm and 8 mm in the maximum magnification.

4. The telescope or riflescope according to one of the preceding claims, **characterized in that** the optical magnification means of the erecting system (1) has a maximum magnification of at least five times, preferably a maximum magnification of at least six times.

5. The telescope or riflescope according to one of the preceding claims, **characterized in that** the optical beam deflector device (2) comprises preferably two lenses (7) adhered to one another.

6. The telescope or riflescope according to one of the preceding claims, **characterized in that** the optical beam deflector device (2) has a refractive power of between -27 dpt and -37 dpt.

7. The telescope or riflescope according to one of the preceding claims, **characterized in that** the optical beam deflector device (2) is fixedly disposed on the end of the erecting system (1) facing the eyepiece (5).

## Revendications

1. Télescope ou lunette de visée, avec un tube médian (6), qui est agencé entre un objectif (4) et un oculaire (5), dans lequel le tube médian (6) présente un diamètre extérieur maximal de 35 mm,
- et dans lequel le tube médian (6) contient un système d'inversion (1) avec une optique d'agrandissement réglable intégrée, dans lequel le système d'inversion (1) et l'optique d'agrandissement sont réalisés en un composant et dans lequel le système d'inversion (1) comprend un premier élément optique (3a) et un deuxième élément optique (3b), dans lequel les deux éléments optiques (3a, 3b) sont formés par des lentilles et peuvent être déplacés l'un par rapport à l'autre,
- et dans lequel par le déplacement des deux éléments optiques (3a, 3b) du système d'inversion (1), une image intermédiaire conçue par l'objectif (4) dans un plan d'image côté objectif (9), est formée dans un plan d'image côté oculaire (10) avec une échelle d'image modifiable et redressée et agrandie avec un grossissement supérieur à quatre,
- **caractérisé en ce qu'**un dispositif de déviation de faisceau optique (2) formé par un agencement de lentilles supplémentaire est intégré dans le système d'inversion (1) en tant que troisième élément optique,
- dans lequel la direction de déviation du faisceau (2) est agencée sur le côté du système d'inversion (1) tourné vers l'oculaire (5),
- et dans lequel le système d'inversion (1) est agencé entre le plan d'image côté objectif (9) et le plan d'image côté oculaire (10), dans lequel le plan d'image côté objectif (9) se trouve entre l'objectif (4) et le côté du système d'inversion (1) tourné vers l'objectif (4), et dans lequel le plan d'image côté oculaire (10) est agencé entre l'oculaire (5) et le côté du système d'inversion (1) tourné vers l'oculaire (5),
- et le dispositif de déviation de faisceau (2) est conçu avec une puissance de réfraction comprise entre -20 dpt (dioptries) et -40 dpt,
- et **en ce que** le système d'inversion (1) présente dans le grossissement maximal une distance focale totale d'au plus 11 mm, au moins pour une lumière d'une longueur d'onde d'environ 550 nm.

2. Télescope ou lunette de visée selon la revendication 1, **caractérisé en ce que** le système d'inversion (1) présente, au grossissement maximal, une distance focale totale entre 11 mm et 7 mm.

3. Télescope ou lunette de visée selon la revendication 2, **caractérisé en ce que** le système d'inversion (1) présente, au grossissement maximal, une distance focale totale entre 10 mm et 8 mm.

4. Télescope ou lunette de visée selon l'une quelconque des revendications précédentes, **caractérisé en ce que** l'optique de grossissement du système d'inversion (1) présente un grossissement maximal d'au moins cinq fois, de préférence un grossissement maximal d'au moins six fois.

5. Télescope ou lunette de visée selon l'une quelconque des revendications précédentes, **caractérisé en ce que** le dispositif de déviation de faisceau optique (2) présente de préférence deux lentilles (7) assemblées par collage.

6. Télescope ou lunette de visée selon l'une quelconque des revendications précédentes, **caractérisé en ce que** le dispositif de déviation de faisceau optique (2) présente une force de réfraction entre -27 dpt et -37 dpt.

7. Télescope ou lunette de visée selon l'une quelconque des revendications précédentes, **caractérisé en ce que** le dispositif de déviation de faisceau optique (2) est agencée de manière fixe sur le côté du système d'inversion (1) orienté vers l'oculaire (5).
